**Europäisches Patentamt**

**European Patent Office**

**Office européen des brevets**

(19)

(11) **EP 1 022 631 A2**

(12) # EUROPEAN PATENT APPLICATION

(43) Date of publication:
26.07.2000 Bulletin 2000/30

(51) Int Cl.⁷: **G05B 19/418**

(21) Application number: **99203127.8**

(22) Date of filing: **24.09.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **23.01.1999 EP 99101262**

(71) Applicant: **ABB RESEARCH LTD.**
**8050 Zürich (CH)**

(72) Inventors:
• **Frey, Jan-Erik**
**724 63 Västeras (SE)**

• **Olsson, Björn**
**2340 Mödling (AT)**
• **Petersson, Mikael**
**224 56 Lund (SE)**
• **Majanen, Robert**
**723 45 Västeras (SE)**

(74) Representative: **Mrazek, Werner**
**Aros Patent AB**
**P.O. Box 1544**
**751 45 Uppsala (SE)**

(54) **Integration of diagnostics and control in a component-based production line**

(57)    The invention relates to the integration of diagnostics and control in a production line based on process components (10). Preferably, the control system and the diagnostic system are built as a hierarchical and highly distributed system, where as much as possible of the pre-processing and low-level diagnostics is accomplished at the lower levels of the system. At the process component level, diagnostics (12) are integrated with the control software (11) controlling the process hardware of the production line. The production line is typically comprised of a number of cells of process components, and each cell is controlled by a cell controller (20). At the cell level, diagnostics (22) are integrated in the cell control software (21) of the cell controllers (20). For example, diagnostic functions could be integrated with the control software programs by extending the IEC 1131-3 SFC language with diagnostic functions, or precompiling the source code of the control program and adding code for diagnostic functions.

Fig. 2

EP 1 022 631 A2

**Description**

**TECHNICAL FIELD OF THE INVENTION**

The present invention generally relates to a discrete manufacturing or production line such as a robot-based production line, and more particularly to a diagnostic system integrated with the control system of such a production line, the engineering of such a diagnostic system as well as methods for integrating diagnostic functions with control software controlling process hardware in a production line.

**BACKGROUND OF THE INVENTION**

The typical availability of conventional production lines is relatively low. For example, for automotive production lines the availability is often below 75%. A large portion of the downtime is attributed to handling production stops and performance problems in general, and detecting and isolating faults in particular.

Today, discrete production lines such as robot-based production lines in automotive production are usually built according to a variety of specific customer or sub-supplier standards and preferences. These production lines have a heterogeneous system structure, i.e. the system consists of a combination of subsystems and components from different suppliers with partly incompatible communication interfaces. This often results in production lines that lack system-wide data integrity and have limited bi-directional information transfer between subsystems, which in turn leads to time-consuming restart problems after unexpected production stops. In addition, no transparent information flow through the whole system is possible, and therefore data acquired by subsystems are often not available for central application specific processing functions such as monitoring and diagnosis.

The monitoring and diagnostic tools can only be add-on tools and the functionality of these tools is limited to the data available from the customer's system and has to be adapted to it in every project.

However, there already exist some support for handling production stops and performance problems in the prior art:

- The main function of the costly and sophisticated Factory Information System (FIS) is production monitoring and statistics.
- Most or all of the machine diagnostics is done entirely in the ladder logic of Programmable Logic Controllers (PLC), with an external system that acquires and displays the PLC variable status. The set-up of these systems is time-consuming, and hence in practice the failure information provided is rather coarse (e.g. fault in zone A).
- Prior art systems do not provide any data for microanalysis. In other words, the operator and maintenance crews have information about the breakdowns and the production times, but can not explain or analyze for example unaccounted times due to cycle and component variations.
- The analysis of the performance and reliability variation is done mainly with stopwatches or based on the breakdown and production statistics.

**RELATED ART**

U.S. patent 5,410,469 to Sakamoto et al. relates to a diagnostic method for a production line which operates in accordance with a sequence ladder program. The sequence ladder program is loaded into a sequence control section which performs sequence control of the production line equipment. The sequence ladder program incorporates a program element that measure the period between the time one drive device starts an operation and the time another drive device in a subsequent stage starts an operation, and another program element that activates one of a number of warning devices if the measured time period is longer than a corresponding preset reference time. In a separate diagnosis control apparatus, a CPU detects the occurrence of any failure in the sequence controlled equipment in accordance with diagnostic programs loaded into it and on the basis of data, representative of active warning devices, from the sequence control section. The CPU in the diagnosis control unit further locates the drive devices corresponding to the active warning devices on the basis of an operation step map that provides the basic data for the sequence control of the ladder program. By setting the reference times as average values of the sum of an initially set reference time and subsequent measurements obtained by the time measurements, the reference times may be modified by "learning".

U.S. patent 5,148,363 to Sakamoto et al. relates to a breakdown diagnosing method for a production line which operates in accordance with a ladder program. Various equipment operations are classified into operation blocks, each of which is classified into operation steps. The equipment is sequentially controlled so as to carry out the operation steps in each block in a predetermined order. The operation time from start to finish of a series of operation steps in each block is measured and compared to a reference time for the subject block to thereby diagnose the presence or absence of an abnormality in each block. Correspondingly, the operation time from start to finish of a series of operation blocks in so-called operation groups is also measured and compared to a reference time for the subject operation group to diagnose the presence or absence of an abnormality in each group.

U.S. patent 4,670,834 relates to a system and method for automatic diagnostic program modification based on control program modification. A distributed machine information and control system includes groups of programmable control stations for controlled operation of associated article of plant machinery. Such a group of programmable control stations with associated plant machinery constitutes a machine diagnostic zone having a plurality of machine diagnostic stations. Each programmable control station in a machine diagnostic zone is associated with its own separate diagnostic station. Each machine diagnostic station has an input for receiving information indicative of operation of the respective plant machinery and contains diagnostic programming for analysing such information. In addition, each machine diagnostic station in a zone is connected via a communications network to a zone diagnostic station for analysing information indicative of the operation of all plant machinery within its zone. Each zone diagnostic station is connected to a central management information system. In order to update diagnostic programming at a diagnostic station to reflect a change in control programming at the corresponding control station, the change in control programming is uploaded to the central management information system and the changes in the control program are identified and the diagnostic program of the associated diagnostic station is reconfigured and subsequently downloaded to the diagnostic station.

The article *Eine modulare Grundsteuerung für flexible Montagezellen* in ATP Automatisierungstechnische Praxis 32 (1990) No. 1 pp. 22-29 describes a modular approach to building manufacturing lines with basic modules, comprising mechanical elements and dedicated control associated thereto, on the lowest level and groups of such modules forming cells on cell level. The coordination of the basic modules within a cell is performed by a cell controller. The modular system also incorporates fault detection and fault report of local faults as well as global faults.

## SUMMARY OF THE INVENTION

It is a general object of the present invention to provide a diagnostic system which forms an integrated part of the control system of a discrete manufacturing or production line. In particular, it is desirable to integrate the diagnostic system with the control system in such a way that the both systems use the same process model.

It is another object of the invention to provide a hierarchical and highly distributed diagnostic system where as much as possible of the pre-processing and low-level diagnostics are accomplished as close as possible to the source and where appropriate high-level diagnostics is accomplished at higher levels in the system hierarchy.

Yet another object of the invention is to improve the detection of performance deviations in a production line with regard to sensitivity and reliability.

It is also an object of the invention to provide a method for the engineering of an improved diagnostic system in a discrete manufacturing or production line.

Still another object is to provide methods for integrating diagnostic functions with control software controlling process hardware in a production line.

These and other objects are met by the invention as defined by the accompanying patent claims 1-43.

In particular, a diagnostic system is defined by the independent claim 1, a method for the engineering of a diagnostic system is defined by the independent claim 35, and methods for integrating diagnostic functions with control software are defined by the independent claims 36 and 41. Preferred and particularly advantageous embodiments are defined by the dependent claims.

The general inventive concept of the invention is to adopt an object oriented approach to control and diagnostics, and to integrate the diagnostic system with the control system of the production line.

Advantageously, an object oriented approach to system development is adopted and the control system, together with the diagnostic system, is built as a hierarchical and highly distributed system, where as much as possible of the pre-processing and low-level diagnostics is accomplished at the lower levels of the system, and only the results are reported to the higher levels in the system hierarchy. Shifting as much as possible of the intelligence down in the system hierarchy has several benefits, such as lowering the demand on communication bandwidth, and enabling a truly modular approach to system development where partly pre-assembled modules with integrated diagnostic functions and ready-made interfaces are plugged together and configured to build the production line.

As the diagnostic system is an integrated part of the control system, it utilizes the same process model as used for control. This greatly reduces the modeling efforts otherwise needed to analyze the processes, and ensures that there are no discrepancies between the control system and the diagnostic system. If changes are made to the control system, the adaptation of the diagnostic system to the new control strategy is facilitated substantially. This means that the amount of additional engineering work required to reconfigure the system is reduced.

In particular, by integrating diagnostic functions with the actual control software at the relevant levels of the system hierarchy, the diagnostic system is automatically updated to control software modifications. The invention proposes two particularly advantageous embodiments for integrating diagnostic functions with the control software that controls process hardware in a production line:

i) pre-compilation - the control software source code is precompiled and code for diagnostic functions is added, the precompiled code including the added diagnostic functions is complied and subsequently downloaded to appropriate control hardware.

ii) extensions - extending a programming language, such as the IEC1131-3 Sequential Function Chart (SFC) programming language, with diagnostic functions, and generating the control software by using the extended language.

According to another embodiment of the invention, the detection of performance deviations in the production line is improved by calculating statistics on the execution time of individual process functions in the control software, and performing one or more change detection tests for process functions based on the statistics so as to detect possible performance-deviation-type faults. Examples of appropriate change detection tests are: the cumulative sum (CUSUM) test, the Geometric Moving Average (GMA) test and the Chi-square test. The above statistics measurements and change detection tests provide a detailed, sensitive and reliable tool for detecting performance deviations. Furthermore, when integrated in the control software they do not require any time-consuming configuration.

In summary, the invention offers the following advantages:

- Facilitated adaptation of the diagnostic system to new control strategies;
- Mismatches between control and diagnostics are minimized or completely avoided;
- Reduced engineering work at reconfigurations;
- A highly distributed diagnostic system with as much as possible of the pre-processing and low-level diagnostics accomplished as close as possible to the source;
- Reduced demand on communication bandwidth due to local processing;
- Modularity, which enables reuse; and
- Detailed, sensitive and reliable diagnostic analysis, without time-consuming configuration.

Other aspects and advantages of the present invention will be appreciated upon reading of the below description of the embodiments of the invention.

## BRIEF DESCRIPTION OF THE DRAWINGS

The invention, together with further objects and advantages thereof, will be best understood by reference to the following description taken together with the accompanying drawings, in which:

Fig. 1 is a schematic diagram of the basic process component, called P-comp, of the production line according to the invention;

Fig. 2 is a schematic diagram illustrating the system layers of the hierarchical component-based production line according to the invention;

Fig. 3 is a schematic overview of the production line structure according to a preferred embodiment of the invention;

Fig. 4 is a schematic diagram reflecting the hierarchical structure of the control system of the invention;

Fig. 5 illustrates the internal structure of a process task and the event flow related to the invocation of a process function;

Fig. 6 is a schematic overview of the diagnostic system architecture and the diagnostic information flow according to a preferred embodiment of the invention;

Fig. 7 is a graph showing an example of an abrupt change in execution time for a process function;

Fig. 8 is a graph showing an example of a degrading execution time for a process function;

Fig. 9 is a graph showing an example of a change in variance of the execution time for a process function;

Fig. 10A gives an overview of the fault detection and isolation for unplanned stops on P-comp level;

Fig. 10B gives an overview of the fault detection and isolation for performance deviations on P-comp level;

Fig. 11 is a flow diagram illustrating the principal fault isolation procedure according to a preferred embodiment;

Fig. 12 illustrates the feature of introducing dummy steps in parallel branches;

Fig. 13 illustrates the general principles of integrating diagnostic functions with the control software of a production line according to a preferred embodiment of the invention;

Fig. 14 illustrates the use of templates to accomplish an extension;

Fig. 15 illustrates the principal program flow of a pre-compiler according to a particular embodiment of the invention;

Fig. 16A gives an overview of the fault detection and isolation procedures on cell level when a fault is reported to the cell controller from an individual P-comp;

Fig. 16B gives an overview of the fault detection and isolation procedures on cell level when a fault is detected in the cell controller; and

Fig. 17 illustrates the main functions of the fault manager according to the invention.

## DETAILED DESCRIPTION OF EMBODIMENTS OF THE INVENTION

Throughout the drawings, the same reference characters will be used for corresponding or similar elements.
For a better understanding of the invention, it will be useful to begin with an overview of the architecture of the component-based system according to the invention. The foundation of the system is the concept of process components. According to this concept, process hardware along with its associated controls are packaged into conceptual containers called process components (P-comps).

### Process components (P-comps)

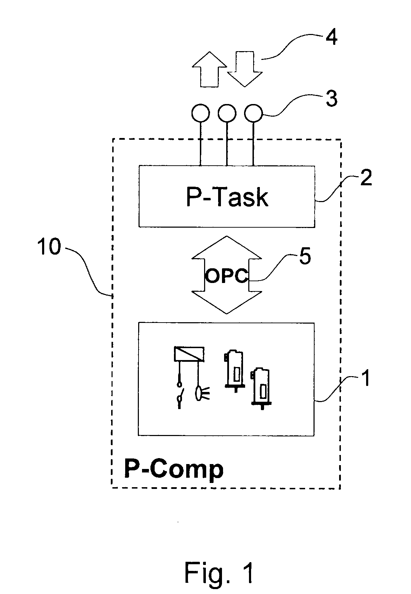

Fig. 1 is a schematic diagram of the basic process component of the production line according to the invention. The P-comp 10 basically includes process hardware 1 and a software task 2 (P-task). The process hardware 1 is the complete set of mechanical and/or electromechanical entities needed to perform the specific functionality that the P-comp provides to the overall manufacturing process. Examples of such process hardware are robots, roller tables, motors, sensors, pneumatic valves and different combinations thereof. The P-task 2 is preferably provided in the form of a reusable software module that controls the P-comp 10 as well as performs diagnostics on the behavior of the P-comp. In other words, a P-comp is a collection of process hardware and pieces of software for control, diagnostics and possibly for other purposes as well. This collection is handled as a single, re-usable standardized product. The name process component is chosen to emphasize that it adheres to an object or process oriented approach to system development, and to distinguish the name from the common concept of pure software components.
All communication with the P-comp 10 is done via the interfaces 3 of the P-task 2, and the P-comps are controlled/synchronized on a supervisory level via messages 4 (P-comp Messages) rather than raw I/O signals. It is important to notice that the process hardware may have its own controllers, e.g., industrial robots. From a system point of view this is not visible however, the only thing that is visible are the interfaces 3 provided by the P-task 2 of the P-comp 10. The process data to/from the process hardware 1 are mapped onto the software representation of the P-comp, i.e. the P-task, via a standard communication mechanism 5 such as OPC.

### System layers

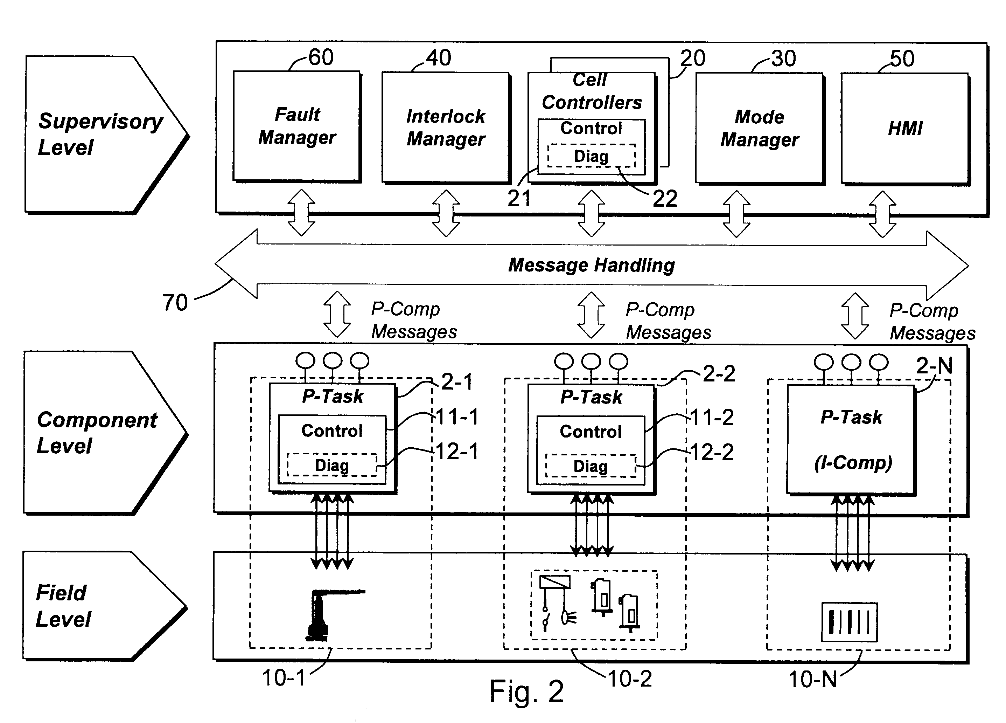

Fig. 2 is a schematic diagram illustrating the system layers of the hierarchical component-based production line according to the invention. The overall system can be divided into three layers based on the granularity and availability of information, as illustrated in Fig. 2.
At the lowest level, the field level, we have the process hardware that actually performs the various steps in the production process. The process data, i.e., I/O signals, are provided to/from the system via OPC. The process hardware can be of varying complexity, e.g., compare an industrial robot with a pneumatic valve. This means that some of the "intelligence" of the P-comps, such as control algorithms or diagnostics, may reside at the field level. As described above, this intelligence is exposed to the system only via the P-task Interfaces.

At the next level in the system hierarchy, the component level, the raw process data are mapped to their corresponding P-tasks 2-1 to 2-N and preprocessed. The P-task, which is the software representation of the P-comp within the system, is responsible for the actual control of the process hardware. The P-task preferably includes all of the diagnostic functionality needed to monitor the execution and performance of the P-comp. This is referred to as P-comp self diagnosis. As illustrated by the dotted boxes in Fig. 2, the diagnostic functionality 12-1 to 12-N on this level is an integrated part of the control 11-1 to 11-N. The field level representing the process hardware and the component level representing the P-task software are generally conceptually integrated into a single level, referred to as the P-comp level at which the P-comps 10-1 to 10-N are found.

On the field-bus level, different communications protocol can be used, but from the "real-world" interface on P-comp level to higher levels of the system hierarchy a common standardized communication protocol is used so that application software components can be easily added or removed. The application software is normally completely independent of the used field-bus technology.

In addition to the normal P-comps defined above, there exists a special type of P-comps, called Information Components (I-Comps), in which the mechanical entities, e.g. part readers, do not control anything directly in the process, but only provide information to the system.

The next level, the supervisory level, normally includes a number of supervisory modules such as cell controllers 20-1 to 20-K (simply designated by 20 in Fig. 2) for cell flow control, a mode manager 30 for mode management, an interlock manager 40 for interlocks between P-comps, a Human-Machine Interface 50 (HMI), as well a fault manager 60 for high level support functions such as high level diagnostics and restart support. All communication between the P-comps 10-1 to 10-N and the supervisory modules is accomplished by P-comp messages via the P-task Interfaces, and a message handling system 70 is responsible for receiving and dispatching P-comp messages as well as handling the internal communication between the supervisory modules.

Although not illustrated in that way in Fig. 2, the supervisory level can be regarded as comprising two sub levels, a lower supervisory level including the cell controllers, and a higher supervisory level with the HMI and fault manager. It is particularly appropriate to think of the HMI and the fault manager as being on a higher level than the cell controllers when the fault manager receives diagnostic messages from several cell controllers.

The process components (P-comps) are normally arranged into cells as will be described later on, and accordingly the cell controllers (CCs) 20-1 to 20-K play a central role in the system. Apart from the cell flow control, i.e., the coordination of P-comps within the cell, the CCs are also responsible for cell to cell communication and cell level diagnostics. In similarity to the self-diagnosis of P-comps, the cell level diagnostics 22 is preferably completely integrated with the control part 21 of CCs as indicated in Fig. 2.

As indicated in fig. 2, the control system includes an integrated diagnostic system. Just as the control system is hierarchical, the diagnostic system is formed as a hierarchical and highly distributed application. Preferably, as much as possible of the monitoring and low-level diagnostics are performed within the P-comps, and only the results are reported higher up in the system hierarchy, as will be described in more detail later on. In this way, the demand on communication bandwidth is reduced, and a modular approach to control and diagnostic system development is enabled.

The main benefit of using P-comps as standardized and partly pre-assembled units with ready-made interfaces is the possibility of building a complete production line application by simply "plugging" the P-comps needed for the specific line together. In brief, the P-comps needed for a specific line are selected, the P-comp process hardware is installed on site, and the control software is installed and configured. Finally, commissioning and system tests are performed.

The possibility of individual pre-testing, the product-like characteristics of P-comps, clearly defined interfaces and standardized cell design shift most of the efforts and costs away from engineering of individual lines into the P-comp design phase. The design, realization and test of the P-comps are done once and does not have to be repeated in individual installations. Therefore, the engineering effort and the commissioning time are reduced and can be well estimated in advance.

**Production line structure**

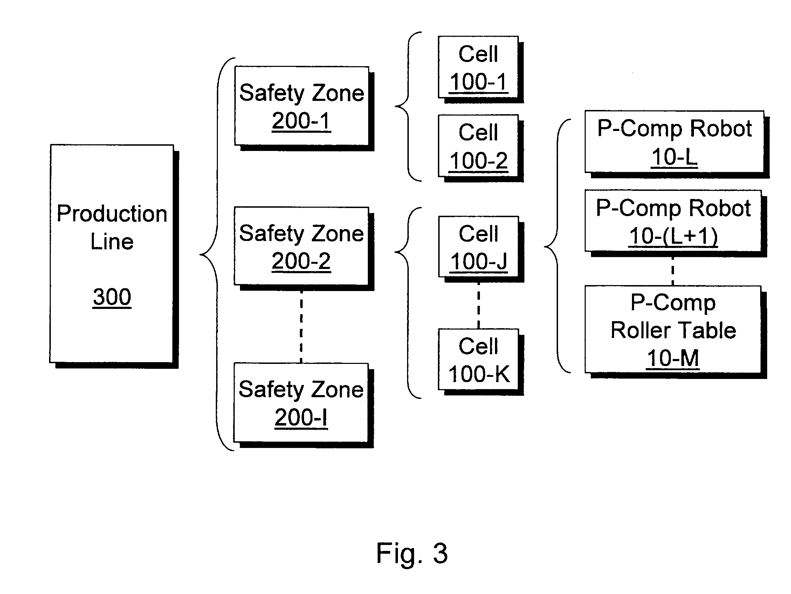

Fig. 3 is a schematic overview of the production line structure according to a preferred embodiment of the invention. The overall structure of a production line 300 is hierarchically organized into three levels: Safety Zones 200-1 to 200-I, Cells 100-1 to 100-K, and P-comps 10-1 to 10-N of which only P-comps 10-L to 10-M are shown in Fig. 3.

A production line normally includes one or more safety zones 200-1 to 200-I. Each safety zone 200 in turn includes one or more production cells 100. A cell is the smallest set of P-comps considered by the control system. Each cell 100 is assigned to a cell controller (CC) that controls the operation of the P-comps within the cell. The structure of the production line is reflected in the control system architecture. In the example of Fig. 3, the following control-system rules are dictated by the production line structure:

RULE 1) A safety zone includes one or more cells.
RULE 2) There is one and only one mode within a safety zone.
RULE 3) There is one and only one cell controller assigned to a cell. In other words, all P-comps within a cell are controlled by one cell controller.
RULE 4) The control range of a cell controller may not overlap safety zone barriers.
RULE 5) Each P-comp is assigned to one and only one cell.

**Control system hierarchy**

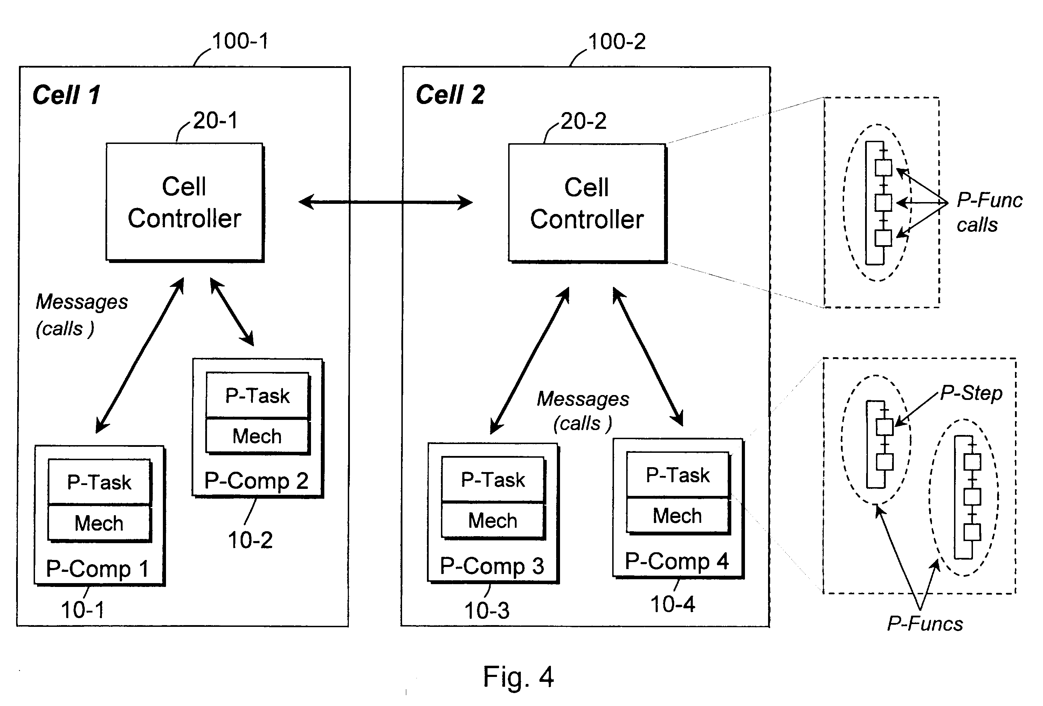

Fig. 4 is a schematic diagram reflecting the hierarchical structure of the control system of the invention. The system of Fig. 4 includes two production cells 100-1 and 100-2. A supervisory controller called cell controller (CC) controls all operation within a cell. The first cell 100-1 includes two P-comps 10-1, 10-2 and a cell controller 20-1. The second cell also includes two P-comps 10-3, 10-4 and a cell controller 20-2.

In particular, each cell controller 20-1, 20-2 controls the process flow of the cell, i.e., the coordination of P-comps within the cell. Each of the cell controllers includes cell control software, a C-task, that performs the coordination (or sequencing) of the P-comps by calling functions, so-called process functions (P-funcs), in the P-comps. These process functions perform a sequence of control actions (P-steps) that actually controls the process hardware. In similarity to a P-func of a P-task, the C-task includes a number of steps called C-steps.

Each cell controller only has access to P-comps within its own cell. This means that all cell-to-cell coordination and communication must go through the CCs. Apart from cell flow control, the cell controller also acts as the interface between the supervisory level and the component level in the system hierarchy.

**Process tasks (P-tasks)**

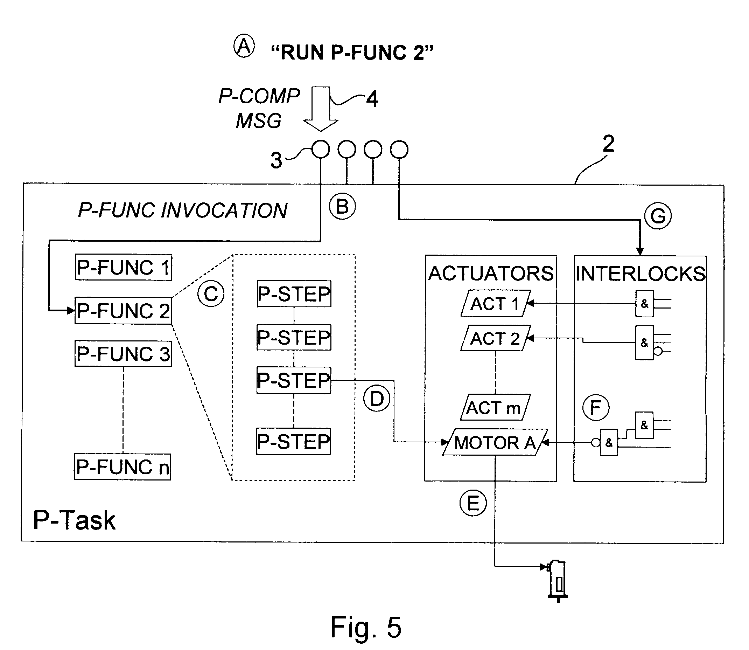

Fig. 5 illustrates the internal structure of a process task and the event flow related to the invocation of a process function. The internal representation of a P-comp within the control system is called the P-task. A P-task is a software process, which manages all of the functionality that the P-comp provides to the system. A P-task can be decomposed in the following building blocks:

- Interlocks: All of the interlocks that are internal to the P-comp.
- Actuators: Handles all low-level actions of the P-comp, e.g., open a clamp.
- Process Functions: The process functionality of the P-comp is defined by one or more process functions (P-funcs). An example of a P-func could be *'Open Tooling'*. These functions are called either by the cell controller or by an operator in manual mode.
- Process Steps: A P-func is composed of one or more process steps (P-steps).
- P-task Interfaces: All of the functionality of the P-task is accessed via a number of interfaces.

Below, the event flow related to a P-func invocation in a P-task will be described with reference to Fig. 5:

A. The cell controller sends a P-comp message to the P-task, requesting the execution of a P-func *(P-func 2)*.
B. The message is dispatched via the P-func Interface, and the desired P-func is invoked.
C. The P-steps of the P-func are executed according to the defined sequence.
D. The P-steps in turn request the activation of some movement, e.g., to start *Motor A*. This is accomplished via the actuator block of *Motor A*.
E. The actuator block of *Motor A* continuously checks any request, and is responsible for setting the correct outputs that actually controls the physical motor.
F. Each movement may have one or more interlocks that can block the movement (in order to prevent an illegal activation of the movement that could damage the equipment).
G. In addition to the internal interlocks, each movement may also depend upon one or more external interlocks provided by the Interlock Manager.

Once invoked, a P-func is always able to complete its execution, independent of any external conditions such as the state other P-comps within the cell. Any coordination between P-comps is handled at the cell level by the CC. Further, only one P-func may be active at a time within a P-comp. If there is a need for parallelism, this should be handled within one P-func, and not between several P-funcs. The basic behavior of a P-func described above can be summarized by the following additional control-system rules:

RULE 6) One and only one P-func of a P-comp may be active at any time.
RULE 7) The execution of a P-func is independent of other P-funcs.

Preferably, the definition and execution order of a P-step and a C-step is analogous to that of the IEC 1131-3 SFC programming language. The SFC language is thus well suited for the implementation of P-funcs and C-tasks. It should though be understood that the SFC language is merely given as an example of a language having certain advantages, and that the invention is not limited thereto. Other programming languages may be used to implement P-funcs, for example any of the other IEC 1131-3 languages.

Parameters may be passed in as arguments to a P-func call. The number and type of parameters is completely application dependent. However, any P-func that takes arguments is required to check the validity of the parameters passed in. If the parameters are not valid, e.g., out of range, the P-func is aborted. A typical example where parameter usage is suitable is a robot picking parts from a pallet. The position of the part to pick could be passed in as a parameter to the "pick" function.

Upon P-func completion, a return code is normally returned from the P-func, indicating whether the execution was successful or not.

As mentioned above, the interlock manager is responsible for checking interlocks between P-comps, and provide an authorization for each P-func within the P-comps, i.e. whether the P-func may execute or not. Similarly to the P-func authorizations, the P-comp exposes a number of state variables (*P-func Safe States*) via an information interface. The Safe State of a P-func is a well-defined (recognized) state of the P-comp, usually reached directly after the P-func has executed successfully. For example, the Safe State of the P-func *Open* might be defined as all clamps open. Hence, the safe states are usually based upon some sensory information. Based upon the P-func safe states, the interlock manager determines the P-func authorizations.

A P-task Interface is not the same thing as a COM interface. However, it does reflect the same principal idea, namely a contract between the P-comp and its user. Any high level functionality of a P-comp is thus accessed only via one of the interfaces of the P-task. Examples of P-task interfaces are:

- P-func Interface.
- Manual Control Interface.
- External Interlock Interface.
- Information Interface.
- Environment Interface.

Of course, a P-task has to be running on some sort of computer hardware such as an Industrial PC (IPC) or an embedded controller. There might and probably will be more than one P-comp, whose P-tasks are running on the same IPC or embedded controller. Therefore, a P-comp does not necessarily have to include a separate IPC. The computer hardware configuration is highly dependent on the capacity of the IPC and complexity of the production cells. However, a rule of thumb is to allocate all P-comps within a cell to the same IPC. This is to avoid external communication between the CC and the P-tasks of its P-comps. It is however possible to handle several cells, including both cell controllers and all involved P-tasks within the same IPC.

In the case of robot-based P-comps, a robot controller is always included, e.g. the ABB S4C controller. The P-task of robot-based P-comps is thus distributed over two computer hardware platforms. It is recommended to limit the computer hardware variety to two different types, namely S4C-type controllers and standard IPCs.

**Diagnostic system overview**

As mentioned above, the diagnostic system is integrated with the control system and has as a hierarchical and distributed architecture.

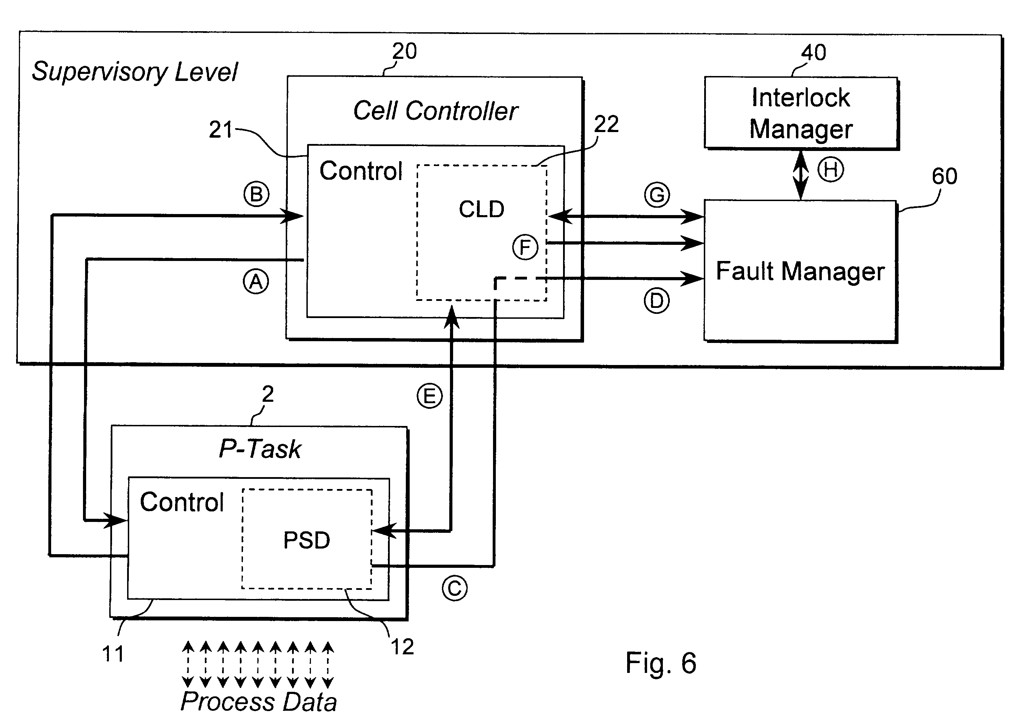

Fig. 6 provides an overview of the diagnostic system architecture and the diagnostic information flow according to a preferred embodiment of the invention. As can be seen in Fig. 6, the diagnostic system is distributed on the P-comp level as well as on the supervisory level. On the P-comp-level, each P-task 2 includes a control task 11 with which P-comp self diagnostic functions (PSD) are integrated. On the supervisory level each cell controller 20 has a control task 21 with which cell level diagnostic functions (CLD) 22 are integrated. A fault manager 60 is provided on the supervisory level or on a higher level for receiving diagnostic information from the P-tasks and/or the cell controllers. The fault manager 60 may act as a simple human-machine interface, merely displaying the diagnostic information reported from the lower levels of the diagnostic system, or may be more complex with an alarm-handling rule base. The cell controller 20 coordinates the P-comps by calling P-funcs according to a programmed sequence. In Fig. 6, the cell controller 20 calls (A) a P-func of the P-task 2. Once the P-func is completed, the cell controller 20 is notified (B) by the P-task 2. Looking at the diagnostic messages that are sent, it can be seen that diagnostic data may originate from the P-tasks and the cell controllers. The data sent can either be event-triggered, or requested.

*Event Triggered Data:*

Upon fault detection, the P-comp self-diagnosis (PSD) 12 sends a diagnostic message (C) with information about the fault detection and possibly about fault isolation within the P-comp to the cell controller. The cell level diagnosis (CLD) 22 may augment this information by adding data, such as where in the sequence the P-func was called or other information on the state of the cell, before passing the data (D) on to the fault manager 60.

Faults may also be detected by the cell level diagnosis (CLD) 60, and sent (F) directly to the fault manager.

*Requested Data:*

If the diagnostic information sent upon fault detection is not sufficient in order to reason about the failure location or cause, additional data may be requested from the P-task (E), cell controller (G), or interlock manager (H).

The fault manager 60 receives diagnostic messages from the P-tasks via the cell controller(s), or directly from the cell controller(s), as indicated in Fig. 6. If the fault manager is configured as a real simple HMI-interface it will merely display the diagnostic information. However, the fault manager may be implemented with an alarm handling rule base and perform fault analysis based on P-comp diagnostic messages and cell diagnostic messages from one or more cells within the system to give appropriate notifications, such as alarms and warnings, to a system operator or to even higher levels of the system hierarchy. As part of the fault analysis, the fault manager 60 may request data from the interlock manager 40, e.g. to check whether the faulty P-comp is lacking an authorization. The fault manager as well as the alarm handling will be described in more detail later on.

**P-comp self diagnosis (PSD)**

Preferably, the P-comp self diagnosis (PSD) is responsible for fault detection as well as fault isolation within a P-comp. Crucial factors of being able to perform as much as possible of the processing locally within a P-comp are the control rules and the P-comp structure. Apart from controlling the sequence of actions within a P-func, the P-steps provide a means of determining the state of a P-comp. The state of a P-comp is given by the active P-func, and the active P-step(s) within that P-func. The performance of a P-func can be analyzed locally since the execution of a P-func is only affected by internal conditions, i.e. all information about a P-comp is available within the P-comp. This feature is used by the diagnostic system to detect two types of faults:

1) Unplanned stops: The execution of a P-func (P-step) stops due to some unfulfilled condition(s).
2) Performance deviations: The performance of a P-func deviates from the nominal behavior. The invention mainly targets three types of deviations:

   a) Abrupt changes in the performance of a P-func;
   b) Degrading performance of a P-func; and
   c) Changes in variation of a P-func performance.

In general, performance deviations are detected on P-func level rather than on P-step level. The reason for this is twofold. First of all, reporting every deviation of P-step performance is usually not practical. Second, a deviation of a single P-step does not necessarily affect the overall performance of the P-func. Unplanned stops are however normally detected on P-step level since production stops must be detected as soon as possible.

*1) Detection of unplanned stops (on P-step level)*

Each P-step generally keeps track of the duration it has been active. This duration, called P-step execution time (PS_T), is preferably the time a P-step is active as defined according to the IEC 1131-3 SFC standard.

The PS_T is thus given by:

$$PS\_T \text{ - } t_{after} \text{ - } t_{before}$$

$t_{before}$ - The time of transition from the P-step before the current P-step

$t_{after}$ - The time of transition to the P-step following the current P-step.

Unplanned stops are detected through the supervision of the P-step execution time. If the execution time exceeds a certain limit, a fault is considered as detected and reported to the cell level diagnosis (CLD). Preferably, a standard limit check is applied to the P-step execution time and the nominal execution time is either entered manually or measured during a calibration phase. Normally, the actual threshold limit used in the limit check is highly application-dependent and the time-out of a P-step is often defined based on a percentage of the nominal execution time.
According to a preferred embodiment, the following statistics are calculated for the P-step execution time.

Table 1 -

| Statistics on P-step Execution Time | | |
|---|---|---|
| **Statistic** | **Name** | **Description** |
| Average Execution Time | PS_TAVG | The average execution time is approximated by a Geometric Moving Average (GMA) method with a given forgetting factor. |
| Variance of Execution Time | PS_TVAR | The variance of the execution time is approximated by a recursive windowing algorithm having a given forgetting factor. |
| Nominal Execution Time | PS_T_N | The nominal execution time is estimated (during calibration) by the sample arithmetic mean of the PS_T with a given sample size. |
| Nominal Variance of Execution Time | PS_TVAR_N | The nominal variance of the execution time is estimated (during calibration) by the sample arithmetic variance of the PS_T with a given sample size. |
| Min/Max Execution Time | PS_TMIN PS_TMAX | The minimum and maximum values of the execution time are kept. The time range of the min/max values is governed by the user. |

Some of the above statistics are used in fault isolation procedures when performance deviations are detected for a P-func, as will be described in more detail later on.

*2) Detection of performance deviations (on P-func level)*

Each P-func keeps track of the duration it has been active. This duration, called the P-func Execution Time (PF_T), is given by:

$$PF\_T\ t_{stop} - t_{start}$$

$t_{start}$ - The time of the P-func activation
$t_{stop}$ - The time of the P-func completion.

According to a preferred embodiment, the following statistics are calculated for the P-func execution time.

Table 2 -

| Statistics on P-func Execution Time | | |
|---|---|---|
| **Statistic** | **Name** | **Description** |
| Average Execution Time | PF_TAVG | The average execution time is approximated by a GMA with a given forgetting factor. |
| Variance of Execution Time | PF_TVAR | The variance of the execution time is approximated by a recursive windowing algorithm with a given forgetting factor. |

Table 2 - (continued)

| Statistics on P-func Execution Time | | |
|---|---|---|
| **Statistic** | **Name** | **Description** |
| Nominal Execution Time | PF_T_N | The nominal execution time is estimated (during calibration) by the sample arithmetic mean of the PF_T with a given sample size. |
| Nominal Variance of Execution Time | PF_TVAR_N | The nominal variance of the execution time is estimated (during calibration) by the sample arithmetic variance of the PF_T with a given sample size. |
| Min/Max Execution Time | PF_TMIN PF_TMAX | The minimum and maximum values of the execution time are kept. The time range of the min/max values is governed by the user. |

Based on the above statistics, different types of performance deviations may be detected using different methods optimized for different deviations.

*2a) Abrupt changes in P-func execution time*

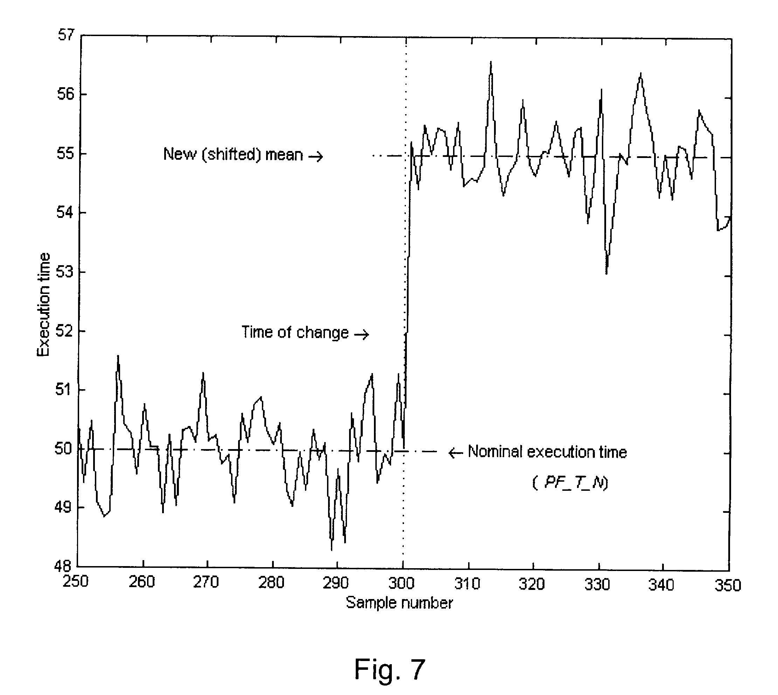

This is the most common scenario of a performance deviation. Abrupt changes in execution time are characterized by a sudden shift of the P-func Execution Time (PF_T), as illustrated in Fig. 7.

A typical cause of such abrupt changes in execution time is some sort of maintenance activity, which can shift the mean in both directions. This is something that is not easily visible for the maintenance engineer today.

To detect the change in mean, a test known as the Cumulative Sum test (CUSUM) is preferably used. The CUSUM test is a per se known test which is computationally fast and has a small mean time to detection (MTD). The test is called a statistical whiteness test, and takes a zero-mean white noise signal as input. An alarm is given when the mean of the signal is significantly different from zero or different from zero for a period of time. A hysteresis may be applied to the CUSUM test to avoid multiple alarms.

The input variable to the CUSUM test is called the test signal, and is denoted $z_k$. For example, a residual is formed as the difference between the measured P-func Execution Time (PF_T) and the nominal value of the PF_T. This residual is then normalized using the nominal variance (PF_TVAR_N) to give the test signal (zk).

The CUSUM test has two design parameters, a drift parameter (v), and an alarm threshold (h). Advantageously, the drift parameter is chosen as a multiple of the standard deviation of the input signal, provided the alarm threshold is larger than the drift parameter. The sum of the drift parameter and the alarm threshold should be equal to 4.5. With a normalized residual as the input signal, the tuning criteria can be summarized with the following rule of thumb:

$$h = 4.5 - v , \ 0 \le v \le h.$$

The only parameter that needs to be set is the drift parameter. It governs the sensitivity of the CUSUM test. That is how small shifts the CUSUM shall be able to detect (expressed in standard deviations). Setting this parameter too low may result in an unstable behavior with a high degree of false alarms.

Upon fault detection and possible fault isolation, a fault tag is reported to the CLD. The fault tag preferably includes a list of all P-steps involved along with their nominal and average execution time.

For manual analysis, a listing of all involved P-steps with nominal execution time, average execution time, and the ratio between those values, presents a good status footprint. This footprint may be saved for later performance evolution analysis.

If an estimation of the new mean, to which the monitored signal shifted, is needed, a moving average estimator over recent values is recommended.

*2b) Degrading P-func execution time*

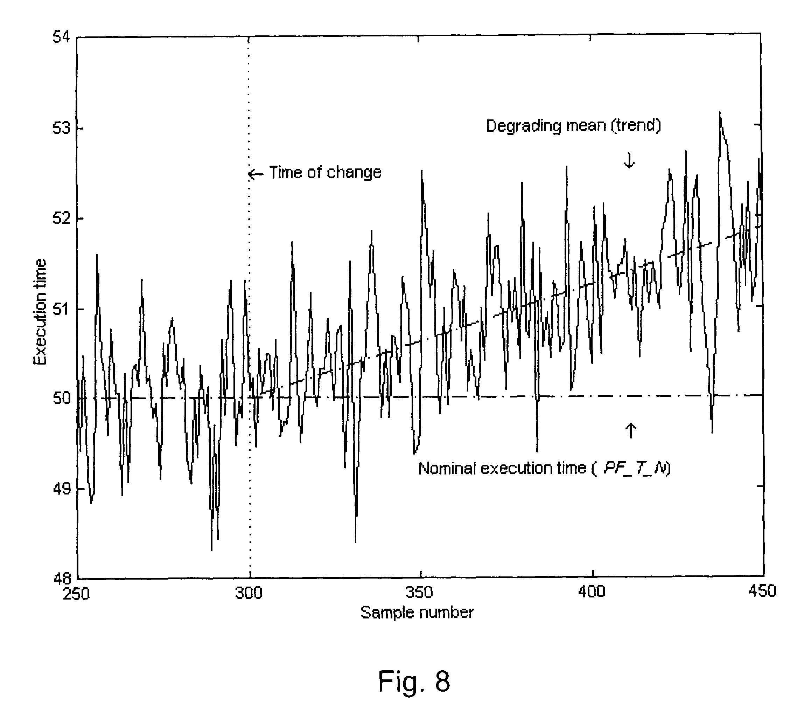

Slowly degrading performance of a P-func is normally characterized by a slowly increasing P-func Execution Time (PF_T), as illustrated in Fig. 8.

Since this type of performance degradation is not so common, it is sufficient to use the same detection method as with abrupt shifts. The detection will however not be as fast as with abrupt shifts, since the degradation must become severe enough to constitute a shift in mean.

An alternate method, which gives the new mean but not an estimate of the time of change, and is less sensitive to changes in variance, is the Geometric Moving Average test (GMA).

*2c) Changes in variation of P-func execution time*

A change in the high frequency content of a signal is often used to detect sensor failure or vibrations. In our case, we are interested in the variation of the P-func execution time. Although some degree of variation is inherent in the process, it is still relevant to detect large variations, since they may cause throughput problems.

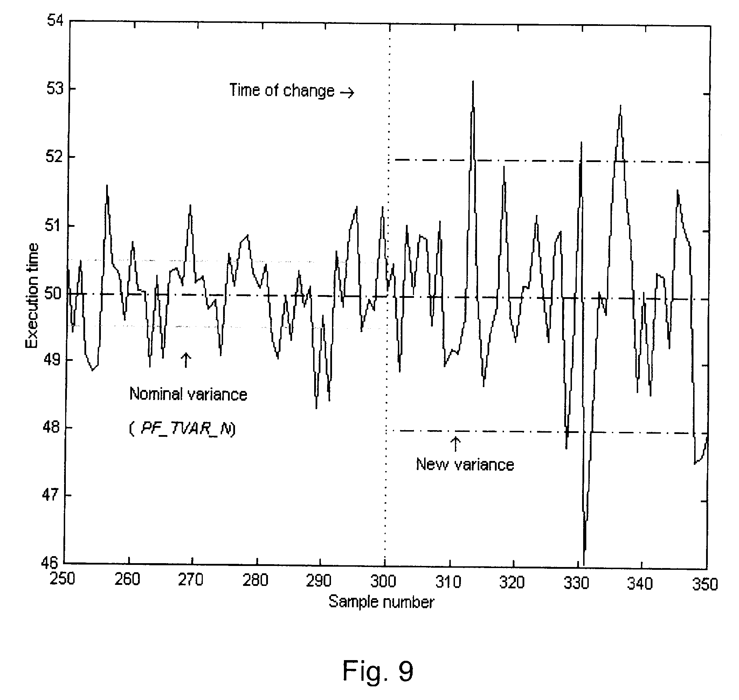

Fig. 9 is a graph showing an example of a change in variance of the execution time for a process function. Typical causes of large variations can be worn down process hardware or operator interaction.

To detect the change in variance a statistical whiteness test known as the Chi-square test ($\chi^2$-test) is used. The test is based on the CUSUM test or the sequential probability ratio test (SPRT) but using another input signal to the test. Preferably, the test signal is the squared residual minus the known residual variance. The test signal is $\chi^2$-distributed, hence the name of the test.

Based on the rule of thumb presented in connection with detection of abrupt changes in execution time, a guideline for the Chi-square test:

$$h = 25 - v, \; 9 \leq v < h.$$

*Fault isolation*

Once a fault has been detected, the PSD preferably starts a fault isolation procedure that examines the involved P-step or P-steps.

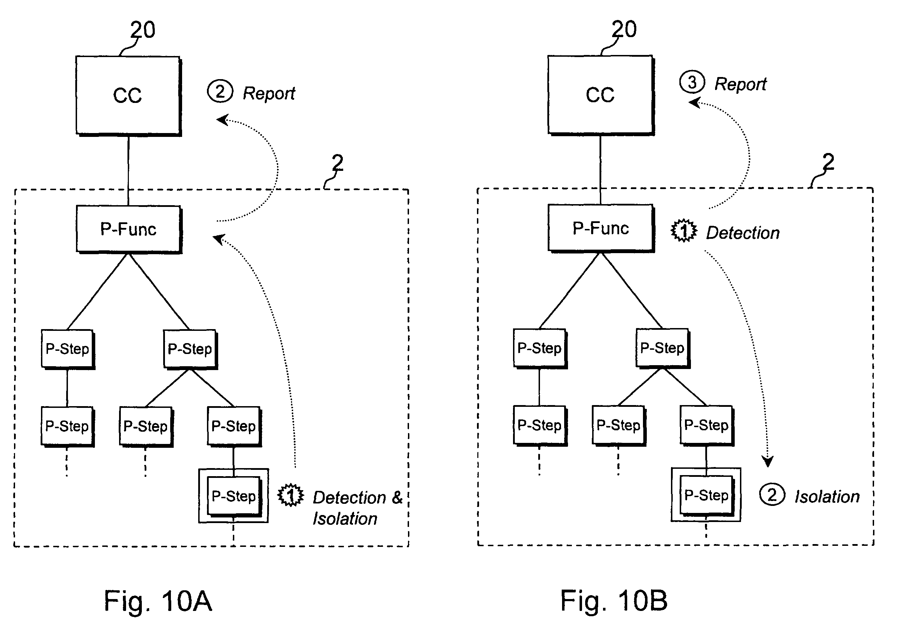

Fig. 10A gives an overview of the fault detection and isolation for unplanned stops. Once the time-out a P-step has been detected, the fault is normally isolated by determining unfulfilled transition and authorization conditions of the faulty P-step. This is preferably accomplished by querying the P-step of its unfulfilled conditions. In other words, an unplanned stop is preferably detected as well as isolated (1) on P-step level, and reported (2) to the cell controller 20 via the corresponding P-func.

Fig. 10B gives an overview of the fault detection and isolation for performance deviations. As described above, performance deviations are normally detected on P-func level (1). Since a P-func is completely defined by its underlying P-steps, and its execution is only dependent upon internal conditions, it is sufficient to analyze the performance of the P-steps in order to determine the origin of a performance deviation. In other words, the performance deviation is isolated on P-step level (2), and then the fault detection and fault isolation are reported (3) to the cell controller 20.

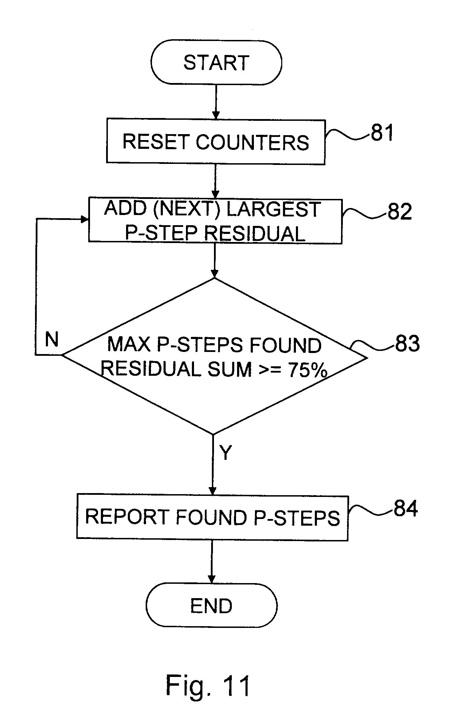

Fig. 11 is a flow diagram illustrating the principal fault isolation procedure for P-func performance deviations according to a preferred embodiment. Comparing the underlying P-step's average execution time to their nominal counterparts isolates the cause of a detected shift in the execution time or the variance of the execution time of a P-func. In step 81, the procedure is initialized by resetting the counter(s) that is used for keeping track of the number of P-steps that are considered as fault location candidates. For each P-step, a residual is formed as the difference between some statistical measure of the P-step performance, e.g. the average P-step execution time, and a corresponding expected (nominal) value of that statistical measure. Since it is very likely that more than one P-step will violate its performance to some degree, we select only P-steps with large residuals as fault candidates. In step 82, the P-step with the (next) largest residual is thus selected as a prime (secondary) candidate fault location, and its residual is added to a residual sum. In step 83, a simple test is performed to see whether the selection process should be continued or not. The selection process is stopped when the number of selected P-steps is equal to a predefined maximum number, or when the residual sum has reached a predetermined level so that most of the P-func deviation has been explained, e.g. more than 75%. In step 84, the finally selected P-step or P-steps are reported as fault location candidates.

*Dummy steps*

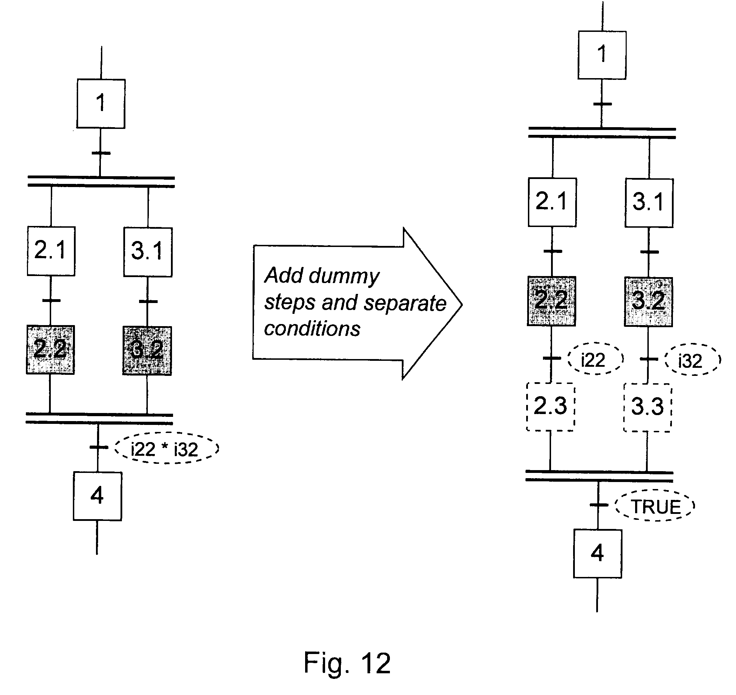

The definition of P-step execution time *(PS_T)* above will imply a slight incorrectness in the case of simultaneous or parallel branches of step sequences, especially in sequential function charts (SFC). For the steps preceding the convergence of parallel step sequences, the measured *PS_T* of at least one of the steps will not be correct. To avoid this, dummy steps are introduced as illustrated in Fig. 12, where a dummy step not subject to any time-out measurements is introduced in each of the parallel branches before the point of convergence.

With reference to Fig. 12, assume that there is a problem with step 3.2 in the left chart, namely that the condition i32 is not fulfilled. Even if step 2.2 is completed on time, i.e., condition i22 is fulfilled on time, the measured time will be governed by the completion of step 3.2. In worst case we might even get an alarm from step 2.2. By introducing the dummy steps 2.3 and 3.3, as can be seen in the right chart of Fig. 12, the conditions for completion of the last P-steps 2.2 and 3.2 in the parallel branches are separated and incorrect P-step fault detection for the parallel step sequences is thus avoided.

In the following, some general and advantageous principles for integrating diagnostic functions with the control program of the P-tasks will be described. For example, diagnostic functions could be integrated with the control program by 1) extending the IEC 1131-3 SFC language with diagnostic functions, or 2) pre-compiling the source code of the control program and adding code for diagnostic functions.

*Extensions*

The IEC 1131-3 SFC language is extended with diagnostic functions, and by using the extended SFC language the control engineer can simply program his/her application and the diagnostic functions will automatically be included in the control program. Also, when the control program is updated with some new logic, the diagnostics will be updated automatically at the same time.

The inventors have realized that the SFC language is very suitable for extensions with respect to diagnostic functions, since it provides information about the state of the control system, i.e. what part of the control program that is executed at a specific instance in time. This is needed in order to be able to analyze the time relationships between various operations that are executed by the control program.

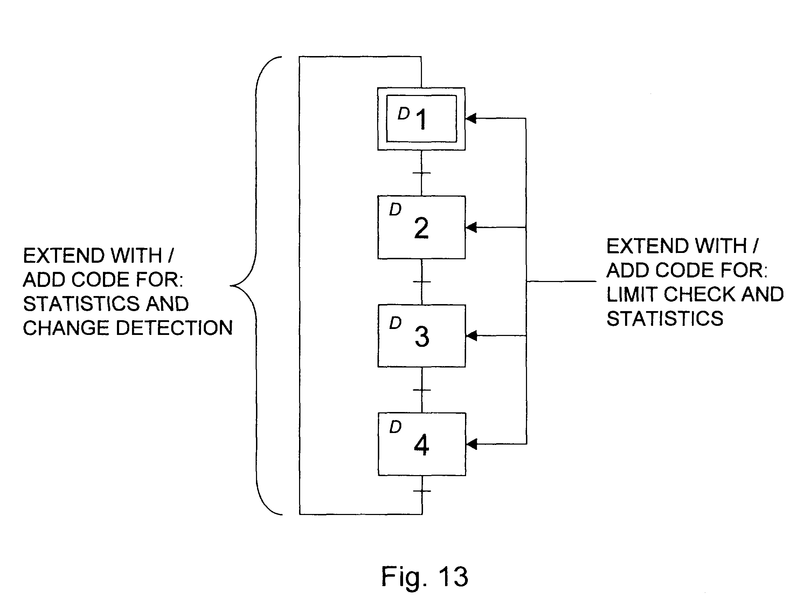

Fig. 13 illustrates two examples of extensions that could be made to the SFC language to incorporate diagnostic functions.

1. Each SFC step already has a timer that keeps track of how long a step has been active. An extended SFC step also performs a limit check on the timer and if the value of the timer exceeds a predetermined threshold a fault is considered to be detected. For the purpose of isolating performance deviations, the extended SFC steps may also keep statistics on the step execution time.

2. A branch of SFC steps is extended such that statistics on the execution time of the SFC branch is calculated, and one or more change detection tests are performed based on the statistics.

One possible approach to accomplish an extension of the SFC language is to use template SFC steps. Templates are provided to various degrees by IEC 1131-3 software on the market.

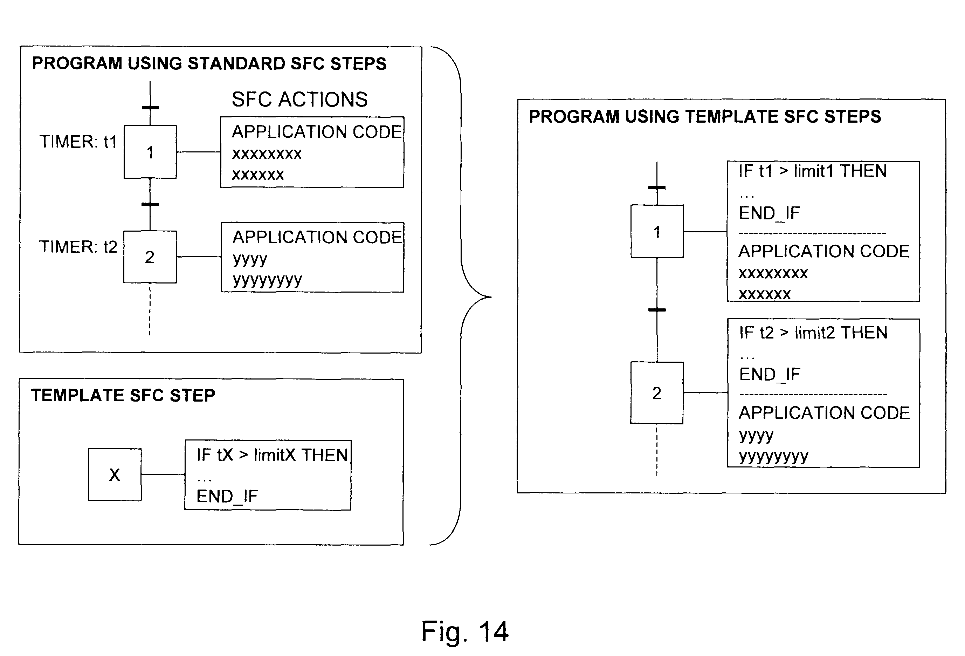

Fig. 14 illustrates the use of templates to accomplish an extension. The idea is to define a template SFC step, which contains all the code that is needed to make the P-Step diagnostics. The program is then built using the template step rather than the standard SFC step. Any reference to variables within the step, for example the timer, is replaced with references to the variables of the particular step, as illustrated in Fig. 14. Normally, each SFC step has a timer that is started as soon as the step is activated, and stopped upon deactivation. In the template step we use this timer to make the limit check on the P-Step execution time. When the template step is used, the reference of the template step is replaced with a reference to the timer of that particular step, for example t1 for step 1, and t2 for step 2. The template step can also create new variables, which are renamed upon creation.

Ideally the template steps would be a part of the engineering environment. In other words, the engineering environment already provides all of the code needed to diagnose a SFC step. This means that the diagnostic code would not be visible to the user, the same way the code for starting and stopping the step timers in SFC are not visible to the user. Hence, the diagnostic code is implemented as hidden code executed in parallel to the application program.

*Pre-compilation*

Another approach is to accomplish the integration of the diagnostic system via pre-compilation of the control program source code. During pre-compilation, the code is interpreted and the necessary code for diagnostic functions is added.

A pre-compiler adds diagnostic code to the P-comp control programs, as well as creates common diagnostic program blocks. The pre-compiler utilizes the structure of the control programs in order to add/generate the diagnostic code. The pre-compiled code is then compiled, for example by an IEC1131 workbench, and downloaded to the target system such as a PLC, controller, soft logic or equivalent.

The control engineer does not have to bother about diagnostics, and can focus on the application, and then add the diagnostic functions by pre-compiling the source code. Also, when the control program is updated with new logic, the source code is pre-compiled once again and diagnostic functions are added to the new parts of the control program. This substantially reduces the amount of additional engineering required.

Pre-compilation is a general technique that can be applied to add diagnostic functions to the source code of any programming language. However, the IEC1131-3 SFC language has two features that make it very suitable for adding diagnostic functions:

- Strict and easy format, which makes the automatic interpretation of the control program straightforward.
- It provides information about the system state needed to analyze the time relationships between various operations executed by the control program.

In the case of another IEC 1131-3 language, a strict programming methodology is defined such that the code can be analyzed automatically. This is not needed with the SFC language.

Referring once again to Fig. 13, two examples of code that can be generated at various levels of an SFC program are illustrated.

1. For a SFC step, code for performing a limit check on the ordinary step timer is generated. For the purpose of isolating performance deviations, code for calculating statistics on the step execution time can also be generated.

2. For a branch of SFC steps, code for calculating statistics on the execution time of the SFC branch and for performing one or more change detection tests based on the statistics is generated.

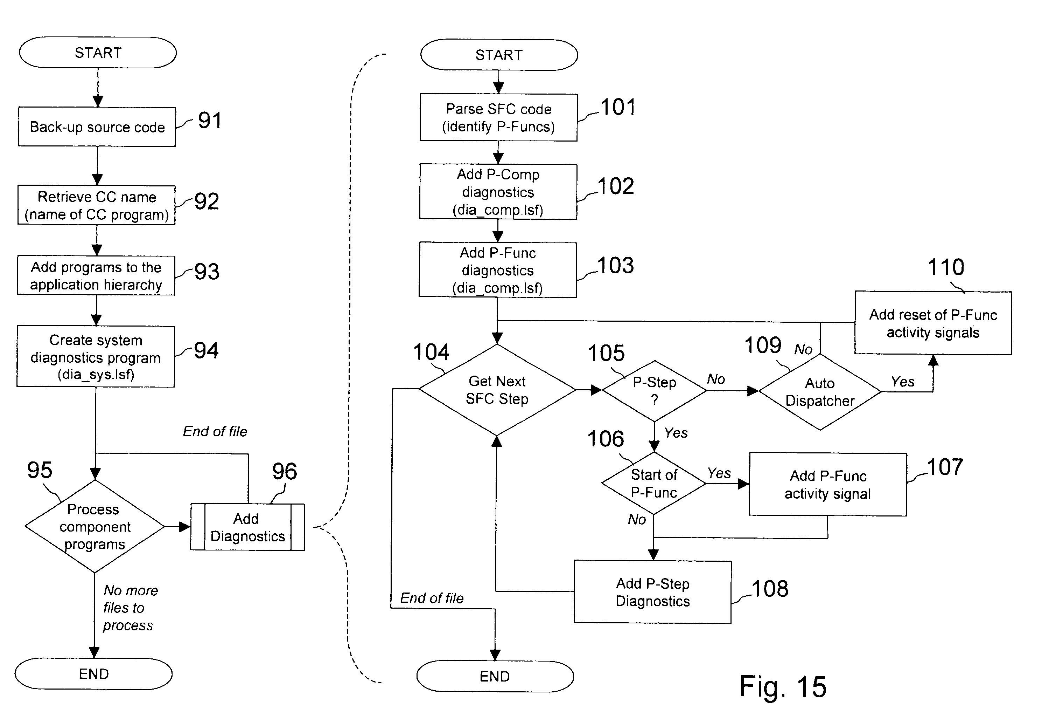

Fig. 15 illustrates the principal program flow of a SFC pre-compiler according to a particular embodiment of the invention. Before pre-compiling the source code, a full back up is made in step 91. In step 92, the cell name (needed to name variables) is retrieved from the name of the cell controller program. In step 93, the application hierarchy is updated to include additional programs called *DIA_SYS* and *DIA_COMP*. In step 94, the program *DIA_SYS* containing the system message handling is created. In step 95, the P-comp programs are traversed. In step 96, diagnostic functions are added to the selected P-comp programs. For each of the selected P-comp programs, the steps 101-110 are performed.

In step 101, the SFC code of the selected P-comp program is first parsed (interpreted) in order to identify which steps belong to which P-function, etc. (step 101). In step 102, P-comp message and alarm handling is added to the program DIA_COMP. In step 103, the P-func diagnostics is added to the program DIA_COMP (execution of P-func diagnostic function blocks). In steps 104-110, diagnostic functions are added to each P-step, as well as to the P-comp auto dispatcher.

It should be understood that this realization is not completely object oriented, and that a completely object-oriented design may be even more advantageous.

Each P-task of a P-comp is a SFC program having one or more P-funcs implemented as SFC "macro steps", where each P-func includes one or more P-steps implemented as SFC steps. A function block called *DIA_FUNC* handles the P-func diagnostics, and a function block called *DIA_STEP* handles the P-step diagnostics.

Each P-step is allocated a function block of type *DIA_STEP.* This function block performs the following:

1. Calculates statistics on the P-step execution time.
2. Performs a limit check on the execution time of the P-step.

Each P-func is allocated a function block of type *DIA_FUNC.* This function block performs the following:

1. Calculates statistics on the P-func execution time.
2. Performs one or more change detection tests on the execution time of the P-func or the variance thereof.

Preferably, each P-task has a function called *DIA_ISOLATE.* This function is responsible for the fault isolation procedure described above. If an unplanned stop is detected by a *DIA_STEP* function block, the function *DIA_ISOLATE* determines unfulfilled conditions, and if a performance deviation is detected by a *DIA_FUNC* function block, the function *DIA_ISOLATE* analyzes the performance of individual P-steps of the identified P-func and selects relevant fault candidates.

Each P-task is allocated an alarm buffer function block called *ALM_BUF,* which is a function block that handles all alarms reported by the P-steps. The alarm buffer is also read by the P-func diagnostics DIA_FUNC in order to filter out bad data, e.g. statistics based on halted P-steps.

All alarms and messages of a P-comp are passed to a message queue function block called *P_COMP_MSG_Q.* Each P-task is also allocated a function block of type *P_COMP_MSG_Q.* All alarms coming from the P-steps and P-funcs of the P-comp are reported via this function block.

Alarms and messages from the message queue function blocks *P_COMP_MSG_Q* are passed to a system message queue *SYSTE_MSG_Q.*

A structured text program, *DIA_COMP,* performs the following:

1. Executes all of the *DIA_FUNC* function blocks of each P-task.
2. Reports P-func change detection to the P-comp message queues *P_COMP_MSG_Q.*
3. Checks the alarm buffers *ALM_BUF* and message queues *P_COMP_MSG_Q* of each P-task and forwards to the CC and/or HMI via the *SYSTEM_MSG_Q.*

A structured text program, *DIA_SYS,* handles the message dispatching to the CC and/or HMI, i.e. forwards all reported alarms and messages from the *SYSTEM_MSG_Q* to the CC and/or HMI.

In this particular realization example, the diagnostic functions of each P-task is thus distributed across several function blocks. Low level alarms originate at the P-step level, whereas higher level warnings originate at P-func level inside the *DIA_COMP* block. It should also be understood that the integration of diagnostics and control does not necessarily mean that the diagnostics and the control are in the exact same program block. Integration of diagnostics and control is accomplished as long as the diagnostic functions and the control functions of the P-task software are intimately related to each other and follow the same process model.

**Cell level diagnosis**

The cell level diagnosis (CLD) is generally responsible for fault detection and isolation related to several P-comps, as well as general fault reasoning on cell level. Preferably, the cell level diagnosis is integrated with the cell control by means of extensions or pre-compilation in the same manner as described above on P-task level.

The CLD primarily detects and isolates faults that occur at the cell level, as well as reasons about detected and reported faults. Preferably, the CLD also provides performance metrics. The responsibilities of the CLD can thus be divided into three main categories:

- Unplanned Stops: The execution of the cell controller software stops due to some unfulfilled condition (not related to an unplanned stop of a P-func).
- Performance Metrics: Various metrics related to the performance of the cell controller such as cell cycle times, waiting times and reliability metrics are preferably provided.
- Fault reasoning: Reasoning about faults that are detected by the CLD, or reported by the P-comps of the cell.

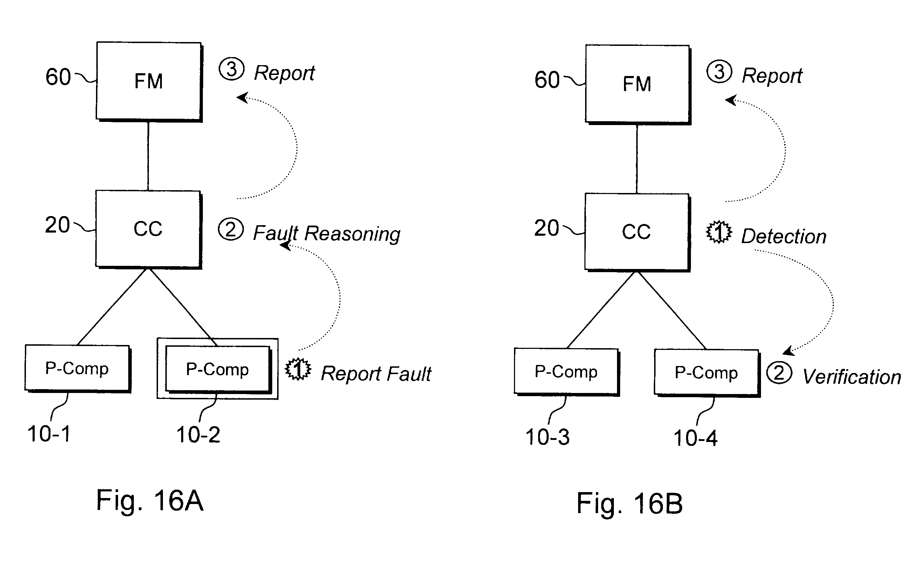

Fig. 16A gives an overview of the fault detection and isolation procedures on cell level when a fault is reported to the cell controller from an individual P-comp. A fault related to one of a number of P-comps 10-1 and 10-2 is detected and possibly isolated within the P-comp 10-2 and the detection and isolation is reported (1) to the CLD of the cell controller 20. The CLD then reasons (2) about the reported fault, e.g. determines whether the fault is relevant or not, and passes (3) the fault on to the FM 60.

Fig. 16B gives an overview of the fault detection and isolation procedures on cell level when a fault is detected in the cell controller. The execution time of each step in the cell controller software is supervised by the CLD and a time limit check is performed to detect unplanned stops in the same manner as described for P-steps within a P-task. Preferably, each step in the cell controller (C-Step) keeps track of the duration it has been active. The duration such a program step is active, called the cell step execution time (CS_T), is defined by:

$$CS\_T = t_{after} - t_{before}$$

$t_{before}$ - The time of transition from the previous C-Step, and
$t_{after}$ - The time of transition to the following C-Step.

If an unplanned stop within the cell controller software is detected (1), the CLD of the cell controller 20 first verifies (2) whether any unplanned stops have occurred in the P-comps 10-1 and 10-2 of the cell. If not, the CLD forwards (3) the fault to the FM 60. If no unplanned stop have been reported by the P-comps to the CLD prior to the detection of an unplanned stop, the transition conditions of the C-Step are examined to further isolate the cause of the stop.

As described above, there are cases where the CLD detects stops, although no stops have been detected by any of the P-comps. There are a number of potential causes for such stops:

- There is an error in the PSD, i.e. the execution of the called P-func has stopped, but no alarm was generated.
- Many of the individual P-steps of the active P-func deviate from their nominal execution times. Each P-step does not deviate enough to constitute an unplanned stop, but the sum of all deviations exceeds the threshold in the CC.
- The C-Step is waiting for some additional condition, other than the completion of the called P-func.

*Performance metrics*

The cycle time (CC_T) of the cell is heuristically defined as the difference between the time of entry of two consecutive products entering the cell. Thus it describes the maximum throughput of the cell, i.e. its capacity. In real life the measured value is the difference between the time of entry of a product in the cell, and the time when the cell becomes ready to accept the entering of the consecutive product. Each cell controller keeps track of the duration it's program cycle has been active. This duration, the cycle time (CC_T), is given by:

$$CC\_T = t_{stop} - t_{start}$$

$t_{start}$ - The time of entry of a product in the cell, and
$t_{stop}$ - The time when the cell is ready to accept consecutive product.

The Cell Step Waiting Time (CS_W), which might unveil poorly synchronised parallel operations, is the time between the completion of one step of the CC, and the start of the consecutive step(s). The waiting time also helps to reveal external or cell conditions that affect the cell cycle time, e.g., no parts in buffer, sideline not ready, etc. If we assume that each C-Step contains a P-func call, the waiting time corresponds to the time between the completion of a P-func and the transition to the next C-Step. The waiting time thus corresponds to the difference between the execution time of the C-Step (CS_T), and the execution time of the P-func (PF_T) called by the C-Step in question:

$$CS_{k\_}W = CS_{k\_}T - PF\_T)CS_k$$

$CS_k\_W$       - Waiting time of C-Step k,
$CS_k\_T$       - Execution time of C-Step k, and
$|PF\_T| CS_k$    - Execution time of P-func called in C-Step k.

Statistics similar to those for P-step and P-func execution time, including average values and variance values, are determined for the cell step execution time (CS_T), cell cycle time (CC_T), and cell waiting time (CW_T).
Other performance metrics that can be used on cell level as well as on P-comp level are mean time between failure and mean time to repair.

*Augmented diagnostic information*

Whenever a fault is reported, the CLD normally adds information about the state of the cell before passing it on to the fault manager (FM).
If an unplanned stop has been reported to the CLD prior to the detection of an unplanned stop in the CC 20, no additional alarm is reported to the FM 60. If however no stops have been reported by the P-comps, an alarm (containing all pertinent information about the status of the current C-Step) is reported to the FM.
Whenever the PSD of the P-comps 10-1 and 10-2 report any performance deviations, the CLD adds additional information related to the performance of the CC. This additional information provides an indication of the impact the P-comp degradation on the total performance of the cell.
Whenever an abrupt change or a degrading execution time of a P-func is reported, the residual of the cycle time is added to the fault tag. This residual is the difference between the statistically measured cycle time and a nominal cycle time.
At detection of a variation of P-func execution time, the residual of the cycle time variance is added to the fault tag. This residual is the difference between the statistically measured cycle time variance and a nominal cycle time variance.

**Fault manager**

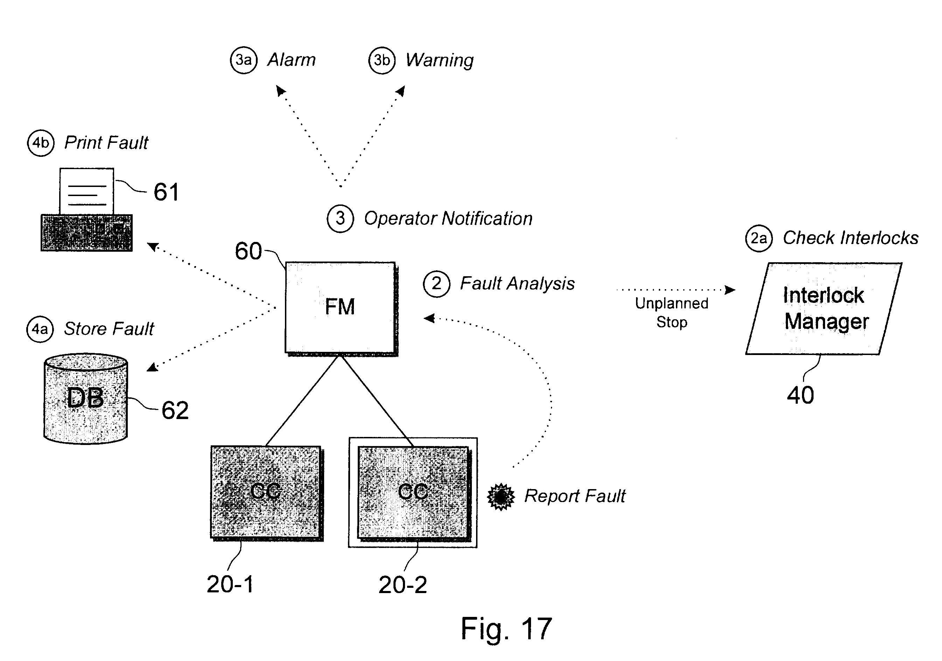

Fig. 17 illustrates the main functions of the fault manager according to the invention. The fault manager 60 is preferably the interface to the operator, as well as to possible higher level diagnostics such as line and plant analysis. The fault manager contains the alarm handling rule base of the diagnostic system, that is all alarm reasoning schemes and rules that state what alarm information shall be displayed and logged.

The fault management tasks of the FM can thus be divided into three subtasks:

- Fault Analysis & Filtering (2)
- Operator Notification (3)
- Fault Logging (4)

The two last tasks, operator notification (3) and fault logging (4), are generally dependent upon the fault analysis (2).

*Fault analysis*

Whenever a fault is reported via P-comp diagnostic messages and/or cell diagnostic messages, the reported signals are investigated. Preferably, each detected fault is associated with a fault tag in the diagnostic messages. The fault tag generally indicates the type of fault, where it was the detected, and a footprint of the data used during the fault detection.

For example, a fault tag may include the following information:

- time of detection;
- identity of the P-comp at which the fault occurred;
- identity of a P-func within the P-comp where the fault originated;
- identity of an involved P-step within the identified P-func;
- a list of signals involved including their expected and observed behavior;
- description of the identified process component (optional);
- description of the identified process function (optional); and
- description of the identified process step (optional);

Examples of other information that could be included in the fault tag are:

- symptom description;
- a fault code;
- a fault description;
- time of acknowledgement;
- operator comment;
- time or returning into operation; and
- duration of down time.

The fault tag information is normally added at different levels in the diagnostic system hierarchy. The time of acknowledgement and operator comment are of course added at a superior level as the operator enters the diagnostic process.

In the case of an unplanned stop being reported, the fault manager 60 normally checks with the interlock manager 40 whether there are any authorizations (interlocks between P-comps) missing for the P-comp that reported the stop (2a).

Preferably, the fault manager determines the severity of the reported faults and whether some faults should be ignored (fault filtering) based on the fault tag information included in the diagnostic messages. Every fault type is assigned a level of severity. The levels are:

- Critical (C): The system has failed, i.e., the system is unable to operate until the fault has been corrected. These types of faults need the immediate attention of the operator.
- Warning (W): The system is not performing according to its nominal targets, e.g. design criterions.
- Nuisance (N): Faults that do not prevent continued operation, or only have negligible effects on the performance of the system.

*Operator notification*

A fault notification filter determines which faults should be presented to the operator. Depending on the severity of the fault, the following actions are taken:

- Critical: Generate an alarm (3a).
- Warning: Generate a warning (3b).
- Nuisance: Ignore fault.

For example, the operator may access the fault information through the following interfaces: an alarm list, an event list and a fault analyzer.

When it comes to critical faults, an audible alarm is given to indicate the presence of a fault. The message is displayed both in the event list, and in the alarm list. The alarm is removed from the alarm list when the alarm is off and has been acknowledged.

Warnings are only displayed in the event list.

The operator can investigate the fault further by accessing the fault analyzer, which provides the more detailed information of the fault.

*Fault logging*

All alarms and warnings shall be stored (4a) in a database 62 to allow post-mortem analysis. If the end-user so requests, the system shall be able to print (4b) all the alarms and warnings on a dedicated printer 61. A so-called fault log filter determines which faults should be logged to a database. A so-called fault print filter determines which faults should be sent to a set of defined network printers.

The embodiments described above are merely given as examples, and it should be understood that the present invention is not limited thereto. Further modifications, changes and improvements which retain the basic underlying principles disclosed and claimed herein are within the scope and spirit of the invention.

**Claims**

1. A diagnostic system in a discrete production line comprising a hierarchical system of components wherein:

   - a first level of the hierarchical system includes a number of process components called P-comps (10), each process component comprising process hardware (1) and P-comp software (2), said P-comp software having:

     - a message-based interface (3) between the P-comp and higher levels of the hierarchical system;
     - P-comp control software (11) for controlling said process hardware;
     - P-comp diagnostic means (12) integrated with said P-comp control software (11) for local diagnostic analysis of the P-comp and for generating P-comp diagnostic messages representative of the diagnostic analysis to higher levels of the system; and

   - a second higher level of the hierarchical system includes a number of production cells (100), each cell comprising a group of cooperating P-comps and a cell controller (20), said cell controller having:

     - cell control software (21) for coordinating the operation of the P-comps by means of control messages to the P-comps; and
     - cell level diagnostic means (22) integrated with said cell control software (21) for local diagnostic analysis of the cell and for generating cell diagnostic messages representative of the diagnostic analysis to higher levels of the system such as a human-machine interface (50) or a fault manager (60).

2. The diagnostic system according to claim 1, wherein the process functionality of a P-comp (10) is defined in said control software (11) by at least one process function (P-func) which is composed of a number of sequential process steps (P-steps), and said P-comp diagnostic means (12) comprises:

   - means for detecting a fault related to the P-comp;
   - means for performing fault isolation within the P-comp to localize at least one P-step at which the fault originated; and
   - means for reporting, via said P-comp diagnostic messages, the fault detection and the fault isolation to the higher levels of the system.

3. The diagnostic system according to claim 2, wherein said fault detecting means is operable for detecting unplanned stops on P-step level, and for detecting other performance deviations on P-func level.

4. The diagnostic system according to claim 3, wherein performance deviations detected at P-func level are isolated on P-step level, and said fault isolation means comprises:

   - means for calculating, for each P-step of a P-func for which a performance deviation has been detected, a residual as the difference of a statistical measure of the execution time of the P-step and a corresponding target value; and
   - means for iteratively selecting the P-step among non-selected P-steps that has the largest residual and adding the residual of the selected P-step to a residual sum until the residual sum has reached a predetermined level or until the number of selected P-steps is equal to a predefined maximum number of P-steps; and

   wherein the thus selected P-step or P-steps are reported as fault location candidates.

5. The diagnostic system according to claim 2 or 3, wherein said fault detecting means comprises:

   - means for supervising the time, also referred to as the P-step execution time, that individual P-steps are active;
   - means for comparing the execution time of a P-step to a time-out threshold and for generating a P-comp diagnostic message indicating the detection of an unplanned stop if the P-step execution time exceeds the threshold.

6. The diagnostic system according to claim 5, wherein said P-comp diagnostic means (12) further comprises means for determining unfulfilled conditions of a timed-out P-step to further isolate the fault.

7. The diagnostic system according to claim 5, wherein parallel operation is handled by means of parallel branches of step sequences within a P-func; and
   a dummy step (2.3/3.3), not subject to said time-out threshold comparison, is introduced in each of the parallel branches before the point of convergence of the branches to avoid incorrect P-step fault detection for the parallel step sequences.

8. The diagnostic system according to claim 1, wherein the process functionality of a P-comp is defined in said control software (11) by at least one process function (P-func) which is composed of a number of sequential process steps (P-steps), and said P-comp diagnostic means (12) comprises:

   - means for calculating statistics on the execution time of individual P-funcs; and
   - means for performing a change detection test for a P-func based on said statistics and for generating a P-comp diagnostic message indicating the detection of a performance-deviation-type fault if the change is sufficiently large.

9. The diagnostic system according to claim 8, wherein the change detection test means is operable for performing a cumulative sum (CUSUM) change detection test to detect a change in execution time.

10. The diagnostic system according to claim 9, wherein the test has two design parameters, a drift parameter and an alarm threshold, and the alarm threshold is larger than the drift parameter and the sum of the drift parameter and the alarm threshold is set to be around 4.5.

11. The diagnostic system according to claim 8, wherein the change detection test means is operable for performing a Geometric Moving Average (GMA) test to detect a relatively slow change in execution time.

12. The diagnostic system according to claim 8, wherein the change detection test means is operable for performing a Chi-square test to detect a change in variance of the execution time.

13. The diagnostic system according to claim 12, wherein the test has two design parameters, a drift parameter and an alarm threshold, and the alarm threshold is larger than the drift parameter which in turn is larger than a value around 9, and the sum of the drift parameter and the alarm threshold is set to be around 25.

14. The diagnostic system according to claim 1, wherein said cell level diagnostic means (22) comprises:

- means for detecting a fault related to the cell (100);
- means for performing fault isolation within the cell to localize the origin of the fault; and
- means for reporting, via said cell diagnostic messages, the fault detection and the fault isolation to the higher levels of the system.

15. The diagnostic system according to claim 1, wherein the process functionality of a P-comp (10) is defined in said P-comp control software (11) by at least one process function (P-func), and said cell control software (21) is operable for coordinating the operation of the P-comps (10) by sequentially calling P-funcs of the P-comps (10), and said cell level diagnostic means (22) comprises:

- means for detecting a fault related to an unplanned stop of the execution of the cell control software (21);
- means for checking whether any unplanned stops in the P-funcs of the P-comps (10) within the cell (100) has been previously reported, via P-comp diagnostic messages from one or more P-comps of the cell, to the cell level diagnostic means (22), and for reporting an unplanned stop of the execution of the cell control software (21) if no unplanned P-func stops have been reported.

16. The diagnostic system according to claim 15, wherein said means for detecting a fault related to an unplanned stop of the execution of the cell control software (21) comprises:

- means for supervising the time, also referred to as C-step execution time, individual steps (C-steps) in the cell control software (21) are active;
- means for comparing the execution time of a C-step to a time-out threshold and for generating a cell diagnostic message indicating the detection of an unplanned stop if the C-step execution time exceeds the threshold.

17. The diagnostic system according to claim 14, wherein said cell level diagnostic means (22) further comprises:

- means for determining the relevance of a fault reported via a P-comp diagnostic message received from a P-comp (10) within the cell (100); and
- means for forwarding the P-comp diagnostic message to the higher levels of the system if the fault is determined as relevant and for filtering out the P-comp message if the fault is determined as non-relevant.

18. The diagnostic system according to claim 17, wherein said cell level diagnostic means for forwarding a P-comp diagnostic message further comprises means for adding, if the fault is determined as relevant, information on the state of the cell to the P-comp diagnostic message before forwarding the P-comp diagnostic message to the higher levels of the system.

19. The diagnostic system according to claim 18, wherein the state information includes at least one of the following data:

- a residual of the cycle time of the cell given by a difference between a statistically measured cycle time and a nominal cycle time; and
- a residual of the cycle time variance given by a difference between a statistically measured cycle time variance and a nominal cycle time variance.

20. The diagnostic system according to claim 1, wherein the fault manager (60) includes means implementing an alarm handling rule base for performing fault analysis based on P-comp diagnostic messages and cell diagnostic messages from at least one cell (100) within the hierarchical system to give appropriate notifications, such as alarms and warnings, to a system operator or to higher levels of the hierarchical system.

21. The diagnostic system according to claim 20, wherein the fault analysis means in the fault manager (60) is operable for determining the severity of faults reported in the diagnostic messages based on fault tags included in the diagnostic messages, whereby each reported fault is assigned a level of severity and an appropriate notification is given according to the level of severity.

22. The diagnostic system according to claim 21, wherein at least the following levels of severity are implemented in the fault manager (60):

critical: the system is unable to operate until the fault has been corrected - an alarm is generated;

warning: the system performance deviates from the nominal performance of the system - a warning is generated; and

nuisance: negligible effects on the system performance - the fault is registered but no alarm or warning is generated.

**23.** The diagnostic system according to claim 21, wherein a fault tag includes the following information:

- time of detection;
- identity of the P-comp (10) at which the fault occurred;
- identity of a process function within the P-comp where the fault originated;
- identity of an involved process step within the process function; and
- a list of signals involved including their expected and observed behavior;

and optionally includes the following additional information:

- description of the identified process component (10);
- description of the identified process function; and
- description of the identified process step.

**24.** The diagnostic system according to claim 3, wherein the fault manager (60), for each reported detection of an unplanned stop in a P-step, is operable for checking whether the P-comp is interlocked by another P-comp.

**25.** The diagnostic system according to claim 1, wherein the process functionality of a P-comp (10) is defined in said control software (11) by at least one process function (P-func), and said cell control software (21) is operable for coordinating the operation of the P-comps by sequentially calling P-funcs of the P-comps, one and only one P-func of a P-comp being active at any time, the execution of a P-func being independent of other P-funcs, and a P-comp being assigned to one and only one cell (100).

**26.** The diagnostic system according to claim 1, wherein the P-comp control software (11) and the cell control software (21) are in the form of IEC1131-3 programs, preferably Sequential Function Chart (SFC) programs.

**27.** The diagnostic system according to claim 1, wherein said diagnostic means (12/22) is integrated with said control software (11/21) by:

- a pre-compiler for pre-compiling the control software source code and adding code for diagnostic functions (D); and

    - means for compiling the pre-compiled code including the added diagnostic functions (D) and downloading the compiled code to a target system.

**28.** The diagnostic system according to claim 27, wherein the control software source code is written in an IEC1131-3 programming language, and said compiling means is an IEC1131-3 workbench.

**29.** The diagnostic system according to claim 28, wherein code for checking the ordinary timer that keeps track of how long a program step has been active against a threshold and generating a fault detection signal when the timer exceeds the threshold is added to each step of the IEC1131-3 code.

**30.** The diagnostic system according to claim 28, wherein code for calculating statistics, such as average and variation values, on the execution time of a branch of the IEC1131-3 code and performing a change detection test based on the calculated values is added to each branch.

**31.** The diagnostic system according to claim 28, wherein said programming language is the IEC1131-3 Sequential Function Chart (SFC) language.

**32.** The diagnostic system according to claim 1, wherein said diagnostic means (12/22) is integrated with said control software (11/21) by extending the IEC1131-3 Sequential Function Chart (SFC) programming language with diagnostic functions, and generating the control software using the extended SFC language.

**33.** The diagnostic system according to claim 32, wherein a SFC step is extended to perform a limit check on the ordinary timer that keeps track of how long the step has been active, a fault being detected when the value of said timer exceeds the limit used by the limit check.

**34.** The diagnostic system according to claim 32, wherein a branch of SFC steps is extended such that statistics on the execution time of the branch is calculated, and a change detection test is performed based on said statistics.

**35.** A method for the engineering of a diagnostic system in a discrete manufacturing line, said method comprising the steps of:

a) preparing a modular hierarchical system of reusable components, wherein:

- a first level of the hierarchical system includes a number of process components called P-comps (10), each process component comprising process hardware (1) and P-comp software (2) having a message-based interface (3) between the P-comp and higher levels of the hierarchical system and P-comp control software (11) for control of said process hardware;
- a second higher level of the hierarchical system includes a number of production cells (100), each cell comprising a group of cooperating P-comps (10) and a cell controller (20) having cell control software (21) for coordinating the operation of the P-comps by means of control messages sent to the P-comps; and
- said control software (11, 21) is configurable; and

wherein the step of preparing the component-based hierarchical system includes:

- integrating P-comp diagnostics (12) with said P-comp control software (11) for local diagnostic analysis of the P-comp (10) and for generating P-comp diagnostic messages representative of the diagnostic analysis to higher levels of the system; and
- integrating cell level diagnostics (22) with said cell control software (21) for local diagnostic analysis of the cell (100) and for generating cell diagnostic messages representative of the diagnostic analysis to higher levels of the system such as a human-machine interface (50) or a fault manager (60); and

b) designing and engineering a specific integrated diagnostic system and manufacturing line by:

- selection of P-comps (10) needed;
- installation of P-comp process hardware (1) on site;
- installation and configuration of said control software (11, 21); and
- performing commissioning and system test.

**36.** A method for integrating diagnostic functions with control software controlling process hardware in a production line, said method comprising the steps of:

- pre-compiling the control software source code and adding code for diagnostic functions; and

  - compiling the pre-compiled code including the added diagnostic functions; and
  - downloading the compiled code to a target system.

**37.** The method according to claim 36, wherein the control software source code is the code of an IEC1131-3 programming language.

**38.** The method according to claim 36, wherein code for checking the ordinary timer that keeps track of how long a step of the IEC1131-3 code has been active against a threshold and generating a fault detection signal when the timer exceeds the threshold is added to each step.

**39.** The method according to claim 37, wherein code for calculating statistics on the execution time of a branch of the IEC1131-3 code and performing a change detection test based on the calculated statistics is added to each branch.

**40.** The method according to claim 37, wherein said programming language is the IEC1131-3 Sequential Function Chart (SFC) language.

**41.** A method for integrating diagnostic functions with control software controlling process hardware in a production line, said method comprising the steps of:

- extending the IEC1131-3 Sequential Function Chart (SFC) programming language with diagnostic functions; and
- generating the control software by using the extended IEC1131-3 SFC language.

**42.** The method according to claim 41, wherein at least one SFC step is extended to perform a limit check on the ordinary timer that keeps track of how long the step has been active, a fault being detected when the value of said timer exceeds the limit used by the limit check.

**43.** The method according to claim 41, wherein at least one SFC branch is extended such that statistics on the execution time of the SFC branch is calculated, and a change detection test is performed based on said statistics.

Fig. 1

Fig. 2

Supervisory Level

60 — Fault Manager
40 — Interlock Manager
20 — Cell Controllers — Control — Diag
21 — 22
30 — Mode Manager
50 — HMI

70 — Message Handling

P-Comp Messages

Component Level

P-Task — 2-1 — Control — 11-1 — Diag — 12-1
P-Task — 2-2 — Control — 11-2 — Diag — 12-2
P-Task (I-Comp) — 2-N

Field Level

10-1
10-2
10-N

25

EP 1 022 631 A2

EP 1 022 631 A2

```
                                                    ┌─────────┐
                                              ┌─────│  Cell   │
                                              │     │  100-1  │
                                              │     └─────────┘
                              ┌─────────────┐ │     ┌─────────┐
                         ┌────│ Safety Zone │─┤     │  Cell   │
                         │    │   200-1     │ └─────│  100-2  │
                         │    └─────────────┘       └─────────┘
                         │                                          ┌──────────────┐
                         │                                    ┌─────│ P-Comp Robot │
                         │                                    │     │    10-L      │
┌──────────────┐         │                                    │     └──────────────┘
│  Production  │         │                                    │     ┌──────────────┐
│    Line      │─────────┤    ┌─────────────┐   ┌─────────┐   │     │ P-Comp Robot │
│              │         │    │ Safety Zone │   │  Cell   │───┤     │  10-(L+1)    │
│    300       │         ├────│   200-2     │───│  100-J  │   │     └──────────────┘
└──────────────┘         │    └─────────────┘   └─────────┘   │     ┌──────────────┐
                         │           ┆               ┆        │     │   P-Comp     │
                         │    ┌─────────────┐   ┌─────────┐   └─────│ Roller Table │
                         │    │ Safety Zone │   │  Cell   │         │    10-M      │
                         └────│   200-I     │   │  100-K  │         └──────────────┘
                              └─────────────┘   └─────────┘
```

Fig. 3

**Cell 1** 100-1

**Cell 2** 100-2

20-1

Cell Controller

20-2

Cell Controller

Messages (calls)

P-Task
Mech
P-Comp 2
10-2

P-Task
Mech
P-Comp 1
10-1

Messages (calls)

P-Task
Mech
P-Comp 3
10-3

P-Task
Mech
P-Comp 4
10-4

P-Func calls

P-Step

P-Funcs

Fig. 4

EP 1 022 631 A2

Fig. 5

EP 1 022 631 A2

Fig. 6

Fig. 7

EP 1 022 631 A2

Fig. 8

Fig. 9

EP 1 022 631 A2

20

CC

(2) Report

2

P-Func

P-Step        P-Step

P-Step    P-Step    P-Step

P-Step        (1) Detection &
                  Isolation

Fig. 10A

20

CC

(3) Report

2

P-Func        (1) Detection

P-Step        P-Step

P-Step    P-Step    P-Step

P-Step        (2) Isolation

Fig. 10B

EP 1 022 631 A2

```
                    ┌─────────┐
                    │  START  │
                    └────┬────┘
                         │
                         ▼
              ┌────────────────────┐
              │   RESET COUNTERS   │───── 81
              └────────┬───────────┘
                       │
                       ▼
              ┌────────────────────┐
         ┌───▶│ ADD (NEXT) LARGEST │───── 82
         │    │  P-STEP RESIDUAL   │
         │    └────────┬───────────┘
         │             │
         │             ▼
         │          ╱──────────╲
       N │        ╱  MAX P-STEPS  ╲
         └───────  FOUND           ── 83
                 ╲  RESIDUAL SUM  ╱
                   ╲  >= 75%    ╱
                    ╲─────┬───╱
                        Y │
                          ▼
              ┌────────────────────┐
              │ REPORT FOUND       │───── 84
              │      P-STEPS       │
              └────────┬───────────┘
                       │
                       ▼
                  ┌─────────┐
                  │   END   │
                  └─────────┘
```

Fig. 11

Add dummy steps and separate conditions

Fig. 12

EXTEND WITH /
ADD CODE FOR:
LIMIT CHECK AND
STATISTICS

$D$ 1

$D$ 2

$D$ 3

$D$ 4

EXTEND WITH /
ADD CODE FOR:
STATISTICS AND
CHANGE DETECTION

Fig. 13

Fig. 14

Fig. 15

Fig. 16A

Fig. 16B

Fig. 17

EP 1 022 631 A2